# EUROPEAN PATENT APPLICATION

(11) **EP 1 106 421 A1**
(43) Date of publication of application: **13.06.2001**
(21) Application number: 00125370.7
(22) Date of filing: 01.12.2000
(51) Int. Cl.: B60M 1/26

(54) **Safety device for cable stretching units, particularly for electric contact lines of railways**

(30) Priority: 10.12.1999 IT MI992567
(71) Applicant: Pfisterer S.r.l., 20094 Corsico (Milano) (IT)
(72) Inventor: Nannini, Osvaldo, 20146 Milano (IT)
(74) Representative: Modiano, Guido, Dr.-Ing.

(57) **Abstract**

A safety device for cable stretching units, particularly for electric contact lines for railroads, comprising a first element (1) which is connected to an end portion of a stretched cable (3) and a second element (2) which is substantially unaffected by longitudinal movements of the stretched cable, the first element (1) being movable with respect to the second element (2) as a consequence of longitudinal movements of the end portion of the stretched cable (3), inertial locking elements (5) are interposed between the first element (1) and the second element (2), and are suitable to lock the first element (1) with respect to the second element (2) when the first element (1) exceeds a preset acceleration in its movement with respect to the second element (2).

## Description

The present invention relates to a safety device for cable stretching units, particularly for electric contact lines of railroads.

The breakage of an electrical conductor of electric contact lines for railroad engines is anything but rare and can occur randomly both along the railroad line and at a station.

This breakage can be caused along the line by the localized wear of the electric contact wire, in rigid points, produced by the friction of the pantograph of the engines or, in stations, can be due to localized melting of the wire produced by poor contact of the pantograph when it is raised in the presence of a load on the part of the engine.

In any case, when breakage occurs, the wire, which is always stretched with considerable force, is pulled away violently from the breaking point on either side. The motion of the wire away from the breaking point is limited only by the stroke allowed by the devices for adjusting the stretching of the wire, which can be constituted by weights or pre-loaded springs.

The damages produced by the rapid motion of the wire away from the breaking point are considerable, since it becomes necessary to restore all the elements connected to the wire, such as for example hangers, steady arms, et cetera, which have been disengaged by the wire, and therefore the subsequent repair work is rather complicated and expensive in terms of execution time and line downtime.

The aim of the present invention is to solve the above problems by providing a safety device which can limit the damage produced by the breakage of a stretched cable, and in particular can limit the damage produced by the breakage of an electric contact wire in electric lines of railroads.

Within this aim, an object of the present invention is to provide a device which allows to immediately stop the motion of the stretched cable away from the breaking point.

Another object of the invention is to provide a device which can be installed in the units for stretching electric contact lines for railroads that are currently in use.

Another object of the invention is to provide a device which is structurally simple and can be manufactured and installed at low costs.

Another object of the invention is to provide a device which ensures high reliability in operation.

This aim and these and other objects which will become better apparent hereinafter are achieved by a safety device for cable stretching units, particularly for electric contact lines for railroads according to the present invention, characterized in that it comprises a first element which is connected to an end portion of a stretched cable and a second element which is substantially unaffected by longitudinal movements of said stretched cable, said first element being movable with respect to said second element as a consequence of longitudinal movements of said end portion of the stretched cable, inertial locking means being interposed between said first element and said second element, said means being suitable to lock said first element with respect to said second element when said first element exceeds a preset acceleration in its movement with respect to said second element.

Further characteristics and advantages of the present invention will become better apparent from the following detailed description of a preferred but not exclusive embodiment thereof, illustrated only by way of non-limitative example in the accompanying drawings, wherein:
Figure 1 is a schematic lateral elevation view of the device according to the present invention;
Figure 2 is an enlarged-scale view of a detail of Figure 1 related to the inertial locking means according to the present invention;
Figure 3 is a sectional view of Figure 2, taken along the line III-III;
Figures 4 and 5 are schematic views of the operation of the inertial locking means according to the present invention;
Figure 6 is a sectional view of Figure 5, taken along the line VI-VI.

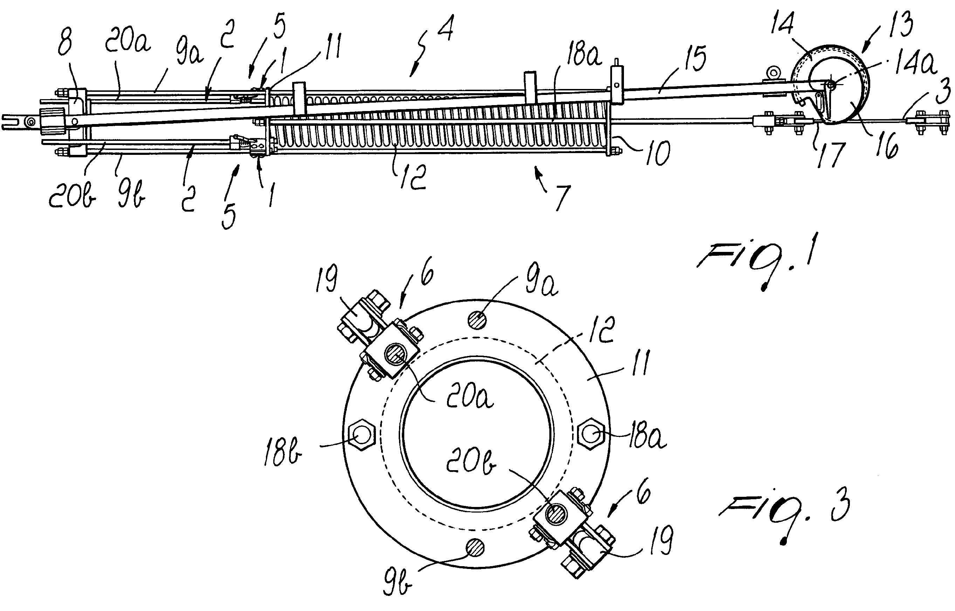

With reference to the figures, the device according to the present invention comprises a first element 1, which is connected to an end portion of a stretched cable 3, and a second element 2, which is substantially not affected by longitudinal movements of the stretched cable 3. Substantially, the second element 2 is mounted on a supporting structure 4 and its condition can be described as substantially static with respect to longitudinal movements of the stretched cable 3 produced by elongations or contractions due to thermal variations or breakage, which are instead transmitted to the first element 1, which is therefore movable with respect to the second element 2 indeed as a consequence of longitudinal movements of the end portion of the stretched cable 3 to which it is connected.

Inertial locking means, generally designated by the reference numeral 5, are interposed between the first element 1 and the second element 2 and are suitable to lock the first element 1 with respect to the second element 2 when the first element 1 exceeds a preset acceleration in its movement with respect to the second element 2.

Advantageously, the first element 1 is slidingly associated with the second element 2 and the locking means 5 comprise an inertial brake 6 which is suitable to lock the sliding of the first element 1 with respect to the second element 2 when said first element 1 exceeds a preset acceleration in its movement with respect to the second element 2.

Conveniently, the device also comprises stretching means 7 which can be constituted, in a per se known manner, by weights or springs and are connected to one of the stretched cable 3. The first element 1 is connected to said end of the stretched cable 3, while the second element 2 is connected to a structure 4 for supporting said stretching means 7.

The stretching means 7 are preferably constituted by the stretching means of a device for compensating length variations of stretched cables of the type disclosed in EPA No. 97950059.2 by the same Applicant.

More particularly, the supporting structure 4 substantially comprises a head block 8 which is designed to be fixed to a pole or other support and is rigidly connected, by means of a pair of mutually parallel guiding rods 9a and 9b, to a fixed plate 10 which is arranged on a plane which is substantially perpendicular to the guiding rods 9a and 9b.

A sliding plate 11 is slidingly mounted along the guiding rods 9a and 9b and faces the fixed plate 10.

The stretching means 7 are interposed between the fixed plate 10 and the sliding plate 11 and comprise a contrast element, constituted by a spring 12, which is adapted to produce an elastic reaction which is variable according to the length variation of the stretched cable 3. The sliding plate 11 is connected to the end of the stretched cable 3 through connecting means 13 which, as more clearly explained in the above-cited Patent, are adapted to convert the elastic reaction of the spring 12 into a substantially constant traction which is applied to the stretched cable 3, regardless of its length, over a preset length variation range.

The connecting means 13 comprise at least one constant-radius pulley 14 which is supported, so that it can rotate about its own axis 14a, by the supporting structure 4 by means of an arm 15 and at least one variable-radius pulley 16 which is rigidly coupled to the pulley 14. The stretched cable 3 is connected to the variable-radius pulley 16 and can be partly wound thereon.

The spring 12 is connected to the constant-radius pulley 14 by means of a connecting cable 17 which can be partly wound on said constant-radius pulley 14 in the opposite direction with respect to the winding of the stretched cable 3 on the pulley 16.

More particularly, the connecting cable 17 is in turn connected, by means of clamps or by means of a guiding pulley, described in the above-cited Patent, to a pair of cables 18a and 18b, or to the two portions of a same cable which winds around the guiding pulley, said cable or cable portions being fixed to the sliding plate 11.

The radius of the pulley 16 is studied so as to convert the elastic reaction of the spring 12, transmitted to the pulley 14, into a constant traction on the cable 3 that is connected to the pulley 16.

It should be observed that the spring 12 can be connected to a variable-radius pulley, which is rigidly coupled to a constant-radius pulley on which the stretched cable 3 partly winds so as to obtain substantially the same constant traction effect.

Moreover, it is possible to provide two twin constant-radius pulleys 14 with an interposed variable-radius pulley 16 by dividing the connecting cable 17, as provided in the above-cited Patent, to which reference is made for the sake of completeness.

The first element 1 comprises a sliding member 19 which can be constituted by a portion of the same sliding plate 11 or by a block which is rigidly connected thereto. The sliding member 19 can slide along the second element 2, which can be constituted by at least one of the guiding rods 9a or 9b or by at least one additional guiding bar which is fixed to the supporting structure 4 and runs parallel to the guiding rods 9a and 9b.

In the illustrated embodiment there are provided two guiding bars 20a and 20b which are parallel to the guiding rods 9a and 9b, are fixed to the fixed plate 11 and are connected to the head block 8.

The inertial brake 6 comprises a wheel 21 which is supported by the sliding member 19 so that it can rotate about its own axis 21a and so that it can slide in a direction which is inclined with respect to the longitudinal extension of the guiding bar 20a. The wheel 21 is connected to an inertial mass 22, which is supported by the sliding member 19. The wheel 21 is interposed between the guiding bar 20a and a surface 23 which is inclined with respect to the longitudinal extension of the guiding bar 20a and is rigidly coupled to the sliding member 19. The wheel 21 can wedge and lock, due to a movement of the sliding member 19 with respect to the inertial mass 22, between the guiding bar 20a and the inclined surface 23 so as to lock the sliding of the sliding member 19 along the guiding bar 20a.

More particularly, the wheel 21 is supported by an axle 24, the two opposite ends of which engage in a pair of slots 25 formed in the sliding member 19 and inclined with respect to the longitudinal extension of the guiding bar 20a.

The slots 25 trace a path which gradually approaches the guiding bar 20a in the opposite direction with respect to the motion of the sliding member 19 produced by any loosening of the stretched cable 3.

The inertial mass 22 is constituted by a block which has a preset mass, is slidingly mounted on the guiding bar 20a, and is spaced from the sliding member 19 on its side directed toward the portion of the guiding bar 20a along which the sliding member 19 can travel following a loosening of the stretched cable 3. The block that constitutes the inertial mass 22 is connected to the axle of the wheel 21 by means of a pair of linkages 26a and 26b. The linkages 26a and 26b are hinged, at their ends, respectively to the block that constitutes the inertial mass 22 and to the ends of the axle 24 that supports the wheel 21, and protrude from the sliding member 19 through the slots 25.

The guiding bar 20a is preferably constituted by a bar which has a circular transverse cross-section, and the wheel 21 is peripherally provided with a groove 27 which has a substantially circular profile and can engage the guiding bar 20a. The inclined surface 23 also has, on its portion that faces the wheel 21, a profile which is shaped complementarily to the groove 27 of the wheel 21.

An elastic element is mounted between the block that constitutes the inertial mass 22 and the sliding member 19 and is preferably constituted by a helical spring 28 which is arranged around the guiding bar 20a and elastically contrasts the approach of the sliding member 19 to the block that constitutes the inertial mass 22.

Conveniently, there is provided an inertial brake 6, such as the one described, along both of the guiding bars 20a and 20b, providing two sliding members 19 rigidly connected to the movable plate 11, as shown.

The operation of the device according to the invention is as follows.

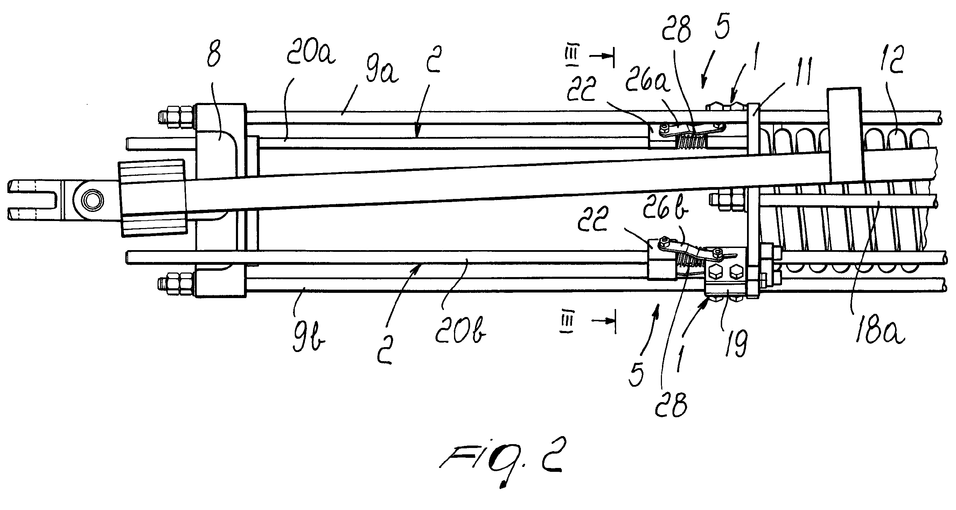

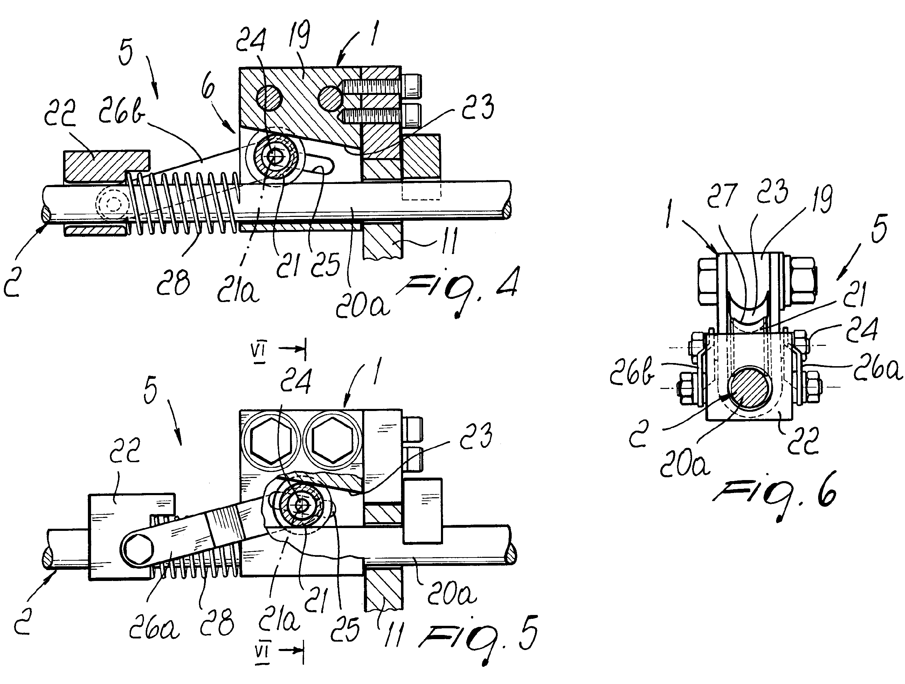

Two devices according to the present invention are applied at the ends of a stretched cable 3, which is preferably constituted by the electrically conducting wire of an electric contact line of a railroad. In the presence of elongations or contractions of the stretched cable 3 owing to thermal expansions or contractions, the sliding plate 11 moves under the action of the stretching means 7 along the guiding rods 9a and 9b. The sliding member 19 moves rigidly with the sliding plate 11, and owing to the fact that its movement has an acceleration which is less than a preset maximum acceleration determined by the sizing of the inertial mass 22, said inertial mass 22 moves together with the sliding member 19, sliding along the corresponding guiding bar 20a and 20b. For this reason, the inertial brake or brakes 6 in these operating conditions is not activated and the disk 11 moves freely along the guiding rods 9a and 9b and along the guiding bars 20a and 20b, compensating for the length variations of the stretched cable 3 and keeping the cable 3 correctly stretched, as shown in Figure 4.

If the stretched cable 3 breaks, the sliding plate 11, due to the stretching means 7, moves suddenly, with a high acceleration which exceeds the preset maximum acceleration, toward the inertial mass 22, which indeed due to its inertia cannot immediately follow the sudden movement of the sliding member 19 along the corresponding guiding bar 20a and 20b. As a consequence of this fact, the wheel 21, connected to the inertial mass 22, slides with the ends of the axle 24 along the slots 25, wedging between the inclined surface 23 and the corresponding guiding bar 20a and 20b. The movement of the sliding member 19 with respect to the inertial mass 22 also produces a compression of the spring 28, as shown in Figure 5.

This wedging, by causing two substantially diametrically opposite regions of the wheel 21 to engage the inclined surface 23 and the guiding bar 20a and 20b, causes the locking of the sliding member 19 along the corresponding guiding bar 20a and 20b, instantly stopping the sliding of the sliding plate 11 along the guiding bars 20a and 20b and along the guiding rods 9a and 9b. In this way, the motion of the stretched cable 3 away from the breaking point is stopped immediately and the unthreading of the stretched cable 3 from the elements that support it is avoided. For this reason, restoring the stretched cable 3 after repairing it is considerably quicker and easier, since it does not entail restoring all the elements that are connected to the cable, such as for example hangers, steady arms, et cetera.

It should be observed that the locking of the wheel 21 between the inclined surface 23 and the corresponding guiding bar 20a and 20b prevents even the spring 28 from moving the inertial mass 22 away from the sliding member 19.

Once the stretched cable 3 has been repaired, the spring 28 moves the inertial mass 22 away from the sliding member 19, disengaging the wheel 21 from the inclined surface 23 and from the corresponding guiding bar 20a and 20b, allowing the sliding member 19 and the sliding plate 11 to slide again along the guiding bars 20a and 20b and along the guiding rods 9a and 9b, in order to compensate the length increases or decreases of the stretched cable 3 as a consequence of thermal expansions or contractions.

In practice it has been observed that the device according to the present invention fully achieves the intended aim and objects, since by instantly stopping the motion of the stretched cable away from the breaking point it allows faster and easier repairing and restoring of the cable.

The device thus conceived is susceptible of numerous modifications and variations, all of which are within the scope of the inventive concept; all the details may further be replaced with other technically equivalent elements.

In practice, the materials employed, as well as the dimensions, may be any according to requirements and to the state of the art.

The disclosures in Italian Patent Application No. MI99A002567 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety device for cable stretching units, particularly for electric contact lines for railroads, characterized in that it comprises a first element which is connected to an end portion of a stretched cable and a second element which is substantially unaffected by longitudinal movements of said stretched cable, said first element being movable with respect to said second element as a consequence of longitudinal movements of said end portion of the stretched cable, inertial locking means being interposed between said first element and said second element, said means being suitable to lock said first element with respect to said second element when said first element exceeds a preset acceleration in its movement with respect to said second element.

2. The device according to claim 1, characterized in that said first element is slidingly associated with said second element; said locking means comprising an inertial brake which is adapted to lock the sliding of said first element with respect to said second element when said first element exceeds a preset acceleration in its sliding with respect to said second element.

3. The device according to claims 1 and 2, characterized in that it comprises stretching means which are connected to one end of said stretched cable; said first element being connected to said end of the stretched cable that is connected to said stretching means and said second element being connected to a structure for supporting said stretching means.

4. The device according to one or more of the preceding claims, characterized in that said second element comprises at least one guiding bar which is fixed to said support and in that said first element comprises a sliding member which can slide along said guiding bar; said inertial brake comprising a wheel which is supported by said sliding member so that it can slide in a direction which is inclined with respect to the longitudinal extension of said guiding bar; said wheel being connected to an inertial mass which is supported by said sliding member and being interposed between said guiding bar and a surface which is inclined with respect to the longitudinal extension of said guiding bar and is fixed to said sliding member; said roller allowing to be wedged, with locking, due to a movement of said sliding member with respect to said inertial mass, between said guiding bar and said inclined surface in order to lock the sliding of said sliding member with respect to said guiding bar.

5. The device according to one or more of the preceding claims, characterized in that said wheel is supported so that it can rotate about its own axis, which is arranged substantially at right angles to the longitudinal extension of said guiding bar, by said sliding member, said wheel being supported by an axle which can slide, with its ends, along a pair of guiding slots which are formed in said sliding member and are inclined with respect to the longitudinal extension of said guiding bar.

6. The device according to one or more of the preceding claims, characterized in that said inertial mass comprises a block which has a preset mass, is slidingly mounted on said guiding bar and is spaced from said sliding member on its side which is directed toward the portion of said guiding bar along which said sliding block can travel following a loosening of said stretched cable; said block being connected to the axle of said wheel.

7. The device according to one or more of the preceding claims, characterized in that said guiding bar has a circular transverse cross-section, and in that said wheel is peripherally provided with a groove which has a substantially circular profile and can engage said guiding bar; said inclined surface being formed by a portion of said sliding member, its side directed toward said guiding bar having a profile which is shaped complementarily with respect to said groove of the wheel.

8. The according to one or more of the preceding claims, characterized in that an elastic element is interposed between said block and said sliding member and elastically contrasts the approach of said sliding member to said block.

9. The device according to one or more of the preceding claims, characterized in that said elastic element is constituted by a helical spring.

10. The device according to one or more of the preceding claims, characterized in that said wheel is connected to said block by means of a pair of linkages which are hinged, at their ends, respectively to said block and to the ends of said axle which supports said wheel, said ends protruding from said sliding member through said guiding slots.

11. The device according to one or more of the preceding claims, characterized in that said second element comprises two parallel guiding bars which are fixed to said supporting structure and in that said first element comprises, for each one of said two guiding bars, a sliding member which can slide along the corresponding guiding bar; said locking means comprising an inertial brake for each one of said guiding bars which is suitable to lock the sliding of said sliding member with respect to the corresponding guiding bar when said sliding member exceeds a preset acceleration in its sliding with respect to the corresponding guiding bar.

12. The device according to one or more of the preceding claims, characterized in that said sliding member is rigidly coupled to a plate which can slide along a pair of guiding rods which are rigidly coupled to said supporting structure and run parallel to said at least one guiding bar; said sliding plate facing a fixed plate which is connected to said supporting structure; stretching means being interposed between said sliding plate and said fixed plate and comprising a contrast element which is suitable to generate an elastic reaction which can vary according to the length variation of said stretched cable; said sliding plate being connected to said end of the stretched cable by way of connecting means which are suitable to convert the elastic reaction of said contrast element into a substantially constant traction which is applied to said stretched cable regardless of its length, over a preset length variation range.

13. The device according to one or more of the preceding claims, characterized in that said connecting means comprise at least one constant-radius pulley, which is supported so that it can rotate about its own axis by said supporting structure, and at least one variable-radius pulley, which is rigidly coupled to said constant-radius pulley; and in that said stretched cable is connected to said variable-radius pulley and can be wound thereon, said contrast element being connected to said constant-radius pulley, by means of a connecting cable which can be wound onto said constant-radius pulley, with a winding direction which is the opposite of the winding direction of said stretched cable on said variable-radius pulley.

14. The device according to one or more of the preceding claims, characterized in that said contrast element is constituted by a spring which is interposed between said sliding plate and said fixed plate and elastically contrasts the rotation of said pulleys in the direction in which said stretched cable unwinds from said variable-radius pulley.
